# EUROPÄISCHE PATENTSCHRIFT

(11) **EP 1 507 111 B1**
(45) Veröffentlichungstag und Bekanntmachung des Hinweises auf die Patenterteilung: **23.08.2006**
(21) Anmeldenummer: 04014503.9
(22) Anmeldetag: 21.06.2004
(51) Int. Cl.: F16L 23/16, F16L 23/18, F01N 7/18

(54) **Flachdichtung für Flanschverbindungen, Flanschverbindung und Verfahren zur Herstellung einer Flanschverbindung**
Flat gasket for flange joints, flange joint and method for manufacturing the flange joint
Joint plat pour raccords à brides, raccord à brides et son procédé de fabrication

(30) Priorität: 13.08.2003 DE 10337274
(43) Veröffentlichungstag der Anmeldung: 16.02.2005
(73) Patentinhaber: Friedrich Boysen GmbH & Co. KG, 72213 Altensteig (DE); Elring Klinger AG, 72581 Dettingen (DE)
(72) Erfinder: Diez, Rainer, 72202 Nagold (DE); Kullen, Wilhelm, 72584 Hülben (DE); Stockinger, Karl, 72224 Ebhausen-Rotfelden (DE); Schöllhammer, Jochen, 72581 Dettingen/Erms (DE); Epple, Fritz, 72766 Reutlingen (DE)
(74) Vertreter: Manitz, Finsterwald & Partner GbR

(56) Entgegenhaltungen:
- EP-A- 0 937 935
- US-A- 5 518 280
- US-A1- 2002 153 667

## Beschreibung

Die vorliegende Erfindung betrifft eine Flachdichtung und eine Flanschverbindung nach dem Oberbegriff der Ansprüche 1 und 7. Eine solche Flachdichtung und eine solche Flanschverbindung sind aus dem Dokument US-A-2002/0153667 bekannt.

In Flanschverbindungen von Abgasanlagen von Brennkraftmaschinen kommen Flachdichtungen zum Einsatz, durch welche das Innere der Abgasanlage nach außen abgedichtet wird. Solche Flanschverbindungen können sowohl zwischen zwei Rohren der Abgasanlage als auch zwischen Abgaskrümmer und Zylinderkopf oder Abgasrückführungsleitung und Zylinderkopf vorgesehen sein. Die hohen Abgastemperaturen beanspruchen dabei sowohl die Dichtungen als auch das gesamte Verspannungssystem mit Flanschen und Schrauben in hohem Maße. Die Flachdichtungen bestehen üblicherweise aus Composite-Material, Graphitwerkstoff oder Glimmerwerkstoff, jeweils mit Metallverstärkung, und können als Metallpaket-Dichtungen mit und ohne Beschichtung sowie als Metallsickendichtungen mit oder ohne Beschichtung ausgebildet sein.

Zur Reduzierung der Temperatur im Dichtungsbereich ist es bekannt, ein Abgasrohr im Flanschbereich in das nachfolgende Rohr hineinragen zu lassen, so genanntes Flammrohr. Damit können die Bauteiltemperatur gesenkt und thermisch bedingte Bauteiländerungen reduziert werden. Das heißt, die Dichtung wird weniger beansprucht. Nachteilig sind der relativ hohe bauliche Aufwand und die damit verbundenen hohen Kosten.

Derartige Probleme können auch in anderen Anwendungsfällen von Flachdichtungen in Verbindung mit heißen Fluiden auftreten.

Der Erfindung liegt die Aufgabe zugrunde, diese Probleme zu lösen. Insbesondere soll eine verbesserte Flachdichtung für Flanschverbindungen zur Verbindung von Fluidführungen für heiße Fluide sowie, eine verbesserte Flanschverbindung angegeben werden.

Die genannte Aufgabe wird durch eine Flachdichtung und eine Flanschverbindung nach dem Anspruch 1 bzw. 7 gelöst.

Durch das hülsenförmige Element wird die Flanschverbindung mit der Flachdichtung vor den hohen Temperaturen des Mediums geschützt, wobei das Vorsehen eines hülsenförmigen Elementes vergleichsweise kostengünstig ist. Das hülsenförmige Element kann einteilig mit der Flachdichtung ausgebildet oder durch Schweißen, Löten, Klemmen oder durch Ausgestaltung als Einsatzelement mit der Flachdichtung verbunden sein. Die einteilige Ausbildung hat den Vorteil, dass kein separates Hülsenelement vorgesehen werden muss.

Das hülsenförmige Element weist einen radialen Abstand zur Innenwand mindestens einer Fluidführung auf, wobei Mittel vorgesehen sind, durch welche der Durchfluss des Mediums durch den so zwischen Hülsenelement und Fluidführung gebildeten Ringraum verhindert ist, insbesondere eine zwischen Hülsenelement und Fluidführung angeordnete Trennwand. Der Ringraum kann dadurch nicht von dem heißen Medium durchströmt werden. Dieses wird vielmehr am Flansch- und Dichtungsbereich vorbeigeführt. Das Hülsenelement bewirkt so durch das im Ringraum angestaute Medium und/oder dort vorhandene Luft eine Isolation zwischen heißem Medium einerseits und Flansch- und Dichtungsbereich andererseits.

Die Dichtung kann ein-, zwei- oder mehrlagig ausgebildet sein, wobei die Dichtung insbesondere als Metalldichtung ausgebildet sein kann.

Insbesondere bei Verwendung einer Metalldichtung kann das hülsenförmige Element aus dem Lagenmaterial der Metalldichtung gezogen sein.

Nach einer anderen Ausgestaltung der Erfindung ist das Hülsenelement als separate Hülse ausgebildet. Dies hat den Vorteil, dass hinsichtlich der Länge des Hülsenelementes grundsätzlich keine Grenzen gesetzt sind.

Bevorzugt ist es, wenn das als separate Hülse ausgebildete Hülsenelement an der Flachdichtung befestigt ist. Dies kann durch Schweißen, Löten, Kleben, Klemmen oder die Ausbildung als Einsatzelement erfolgen.

Insbesondere bei Verwendung einer separaten Hülse kann diese so ausgebildet sein, dass der gesamte Flanschbereich abgedeckt ist. Die Bauteile der Flanschverbindung mitsamt Flanschdichtung können dadurch besonders gut geschützt werden.

Nach der Erfindung ist zumindest eine der Fluidführungen im Hülsenbereich erweitert, wobei die Hülse zumindest annähernd fluchtend mit dem nicht erweiterten Bereich der Fluidführung ausgebildet ist. Der Ringraum zwischen Hülsenelement und Fluidführung befindet sich dadurch außerhalb des unmittelbaren Strömungsbereiches, wodurch die Isolation durch sich im Ringraum ansammelndes Medium und/oder dort vorhandene Luft verbessert ist. Außerdem kann dadurch eine weitgehend verwirbelungsfreie Strömung sichergestellt werden.

Die Flachdichtung kann im Dichtungsbereich auch perforiert sein. Des Weiteren kann die Flachdichtung im Dichtungsbereich in wenigstens einer Lage eine oder mehrere umlaufende Sicken aufweisen. Bei einer zweilagigen Flachdichtung sind die Sicken bevorzugt spiegelbildlich zueinander angeordnet.

Die Flachdichtung besteht nach einer weiteren Ausgestaltung der Erfindung zumindest teilweise aus einem hitzebeständigen Material wie Keramik oder aus einem Graphitwerkstoff oder einem Glimmerwerkstoff mit einer Metallverstärkung. Diese Materialien haben sich für heiße Medien als besonders geeignet erwiesen.

Des Weiteren kann die Flachdichtung bevorzugt mit einer isolierenden oder hochtemperaturbeständigen Beschichtung versehen sein. Damit kann ein Verschließen der Oberflächenrauhigkeiten bewirkt und somit die Dichtheit verbessert werden.

Das hülsenförmige Element kann auch mittels Abstandshaltern an der Flanschverbindung angeordnet sein. Des Weiteren kann das hülsenförmige Element mit Strömungsleiteinrichtungen versehen sein.

Zur Herstellung einer erfindungsgemäßen Flanschverbindung kann das Hülsenelement durch Hochstellen des Flachdichtungsmaterials im Bereich der Durchgangsöffnung für das Fluid gebildet werden. Das ansonsten verlorene Material im Bereich der Durchgangsöffnung der Flachdichtung wird erfindungsgemäß also zur Herstellung des Hülsenelementes verwendet. Dies spart Material und macht eine nachträgliche Anbindung des Hülsenelements an die Flachdichtung entbehrlich.

Nicht beschränkende Ausführungsbeispiele der Erfindung sind in den Zeichnungen dargestellt und werden in den Zeichnungen beschrieben. Es zeigen, jeweils in schematischer Darstellung,
- Fig. 1: eine Flanschverbindung zwischen zwei Abgasrohren mit Flachdichtung nach einer ersten Variante der Erfindung,
- Fig. 2: die Flanschverbindung von Fig. 1 nach einer zweiten Variante der Erfindung,
- Fig. 3: eine Flanschverbindung mit Flachdichtung nach einer dritten Variante der Erfindung,
- Fig. 4 - 7: verschiedene Varianten der Anbindung eines Hülsenelementes an eine Flachdichtung und
- Fig. 8-12: fünf weitere Varianten einer Flanschverbindung mit Flachdichtung.

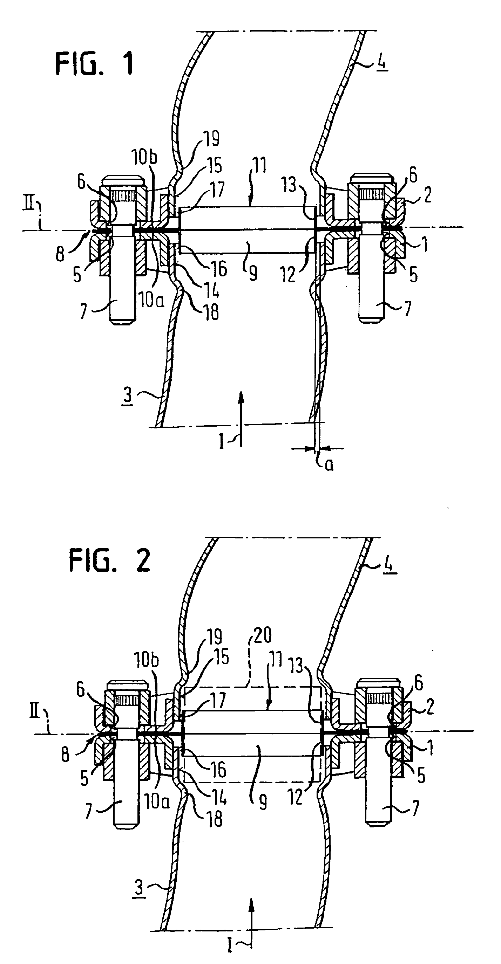

Die in Figur 1 dargestellte Flanschverbindung umfasst zwei Flansche 1 und 2, die jeweils an ein Abgasrohr 3, 4 angeschweißt sind. Die beiden Flansche 1 und 2 weisen jeweils Durchtrittsöffnungen 5, 6 für Verbindungsbolzen 7 auf, mit denen die beiden Flansche 1 und 2 gegeneinander gespannt werden können.

Zwischen den beiden Flanschen 1 und 2 ist eine Flachdichtung 8 angeordnet, bei der es sich insbesondere um eine metallene oder metallverstärkte Dichtung handelt. Das Zentrum der Flachdichtung 8 weist eine Durchgangsöffnung 9 für den Abgasstrom I zwischen den beiden Abgasrohren 3 und 4 auf. In diesem Bereich ist je eine Lage 10a, 10b der Flachdichtung 8 kragenförmig von der jeweils anderen Lage wegweisend hochgestellt, so dass ein Hülsenelement 11 gebildet wird, dessen Längsachse im Wesentlichen mit der Strömungsrichtung I übereinstimmt.

Die hochgestellten Abschnitte 12, 13 der Flachdichtung 8 weisen einen Abstand a von der Innenwand 14, 15 des jeweiligen Abgasrohres 3, 4 auf. Dadurch werden zwischen dem Hülsenelement 11 und den Innenwänden 14, 15 der beiden Rohre 3, 4 zwei Ringräume 16, 17 gebildet, die nur auf einer Seite zum Abgasstrom hin offen, auf der anderen Seite dagegen durch die in diesem Bereich als Trennwand zwischen Hülsenelement 11 und Abgasrohren 3, 4 wirkende Flachdichtung 8 geschlossen sind. Die Ringräume 16, 17 sind daher nicht vom Abgas durchströmt. Das in ihnen angestaute und abgekühlte Abgas und/oder die Luft bilden eine Isolierung zum Dichtungsbereich hin.

Wie man außerdem sieht, sind die beiden Abgasrohre 3, 4 im Bereich der Flanschverbindung in ihrem radialen Durchmesser gegenüber einem vorhergehenden Abschnitt 18, 19 radial erweitert. Die Ringräume 16, 17 werden dadurch nicht direkt vom Abgasstrom beaufschlagt, was insbesondere bei dem entgegen der Abgasströmung I geöffneten Ringraum 16 von Bedeutung ist. Darüber hinaus wird hierdurch eine weitgehend turbulenzfreie Strömung durch das Hülsenelement 11 sichergestellt.

Die in Figur 2 dargestellte Variante stimmt weitgehend mit der Variante von Figur 1 überein. Zusätzlich ist hier jedoch in das Hülsenelement 11 eine separate Hülse 20 eingesetzt. Deren Länge ist gegenüber dem Hülsenelement 11 größer, sodass der gesamte Flanschbereich abgedeckt ist. Die Befestigung der separaten Hülse 20 am Hülsenelement 11 kann beispielsweise durch Schweißen erfolgen.

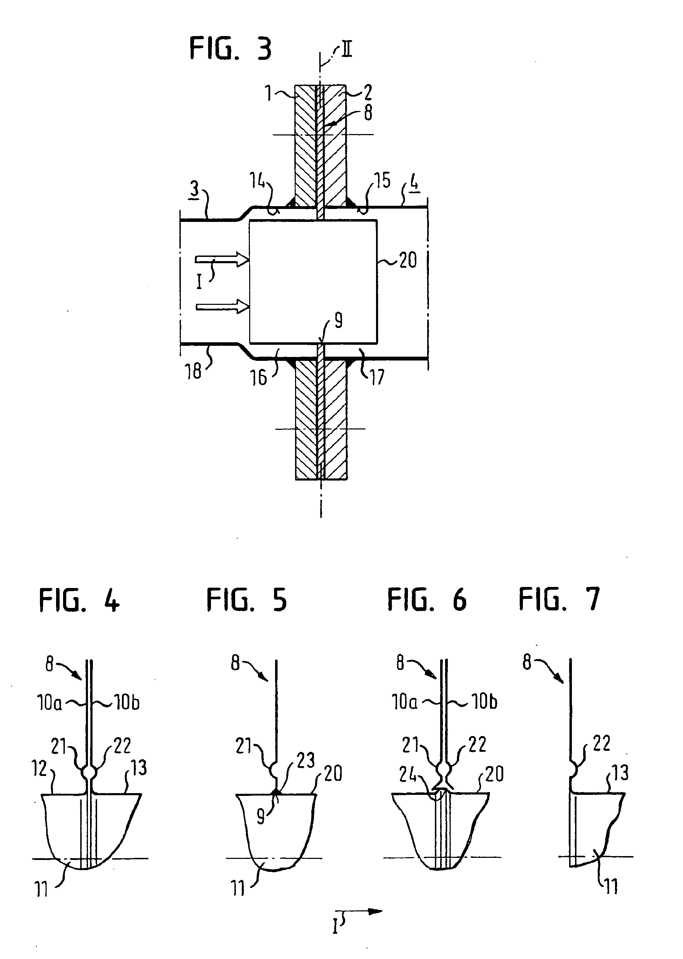

Die in Figur 3 dargestellte Variante stimmt in ihrem Grundaufbau weitgehend mit der Variante von Figur 2 überein. Im Unterschied zu der zuvor beschriebenen Variante ist hier jedoch die Flachdichtung 8 nicht in ihrem Zentrum kragenförmig hochgestellt. Die separate Hülse 20 ist hier unmittelbar an der Durchgangsöffnung der Flachdichtung 8 befestigt. Dies kann beispielsweise durch Schweißen oder Klemmen erfolgen. Die Flachdichtung 8 bildet dadurch eine Trennwand zwischen den Abgasrohren 3, 4 einerseits und der Hülse 20 andererseits, die den Durchfluss von Medium zwischen Hülse 20 und Abgasrohren 3, 4 verhindert.

Figur 4 zeigt wiederum einen Teil einer Flachdichtung 8, die ein Hülsenelement 11 ausbildet. Die beiden Lagen 10a, 10b der Flachdichtung 8 sind hierfür wiederum kragenförmig hochgestellt und bilden hochgestellte Abschnitte 12, 13. Zudem weisen die beiden Lagen 10a, 10b der Flachdichtung 8 hier jeweils eine umlaufende Sicke 21, 22 in zueinander spiegelbildlicher Anordnung auf.

Die in Figur 5 dargestellte Variante zeigt eine einlagige Flachdichtung 5 mit einer umlaufenden Sicke 21. Eine separate Hülse 20 ist über eine Schweißverbindung 23 im Bereich der Durchgangsöffnung 9 mit der Flachdichtung 8 gebunden.

Figur 6 zeigt eine weitere Variante einer zweilagigen Flachdichtung 8 mit zwei umlaufenden, spiegelbildlich zueinander angeordneten Sicken 21, 22. Auch hier ist eine separate Hülse 20 vorgesehen, die im Bereich der Durchgangsöffnung 9 der Flachdichtung 8 an dieser befestigt ist. Die Hülse 20 ist hierfür mit einem umlaufenden Außenbund 24 versehen, und die beiden Lagen 10a, 10b der Flachdichtung 8 sind im Bereich der Durchgangsöffnung 9 von der jeweils anderen Lage weg abgewinkelt ausgebildet. Dadurch ergibt sich auf einfache Weise eine vergrößerte Verbindungsfläche zwischen Flachdichtung 8 und separater Hülse 20.

Figur 7 zeigt eine einlagige Flachdichtung 8 mit umlaufender Sicke 22 und angeformtem Hülsenelement 11. Dieses ist somit nur auf einer Seite der Kontaktebene II der Flanschverbindung vorhanden.

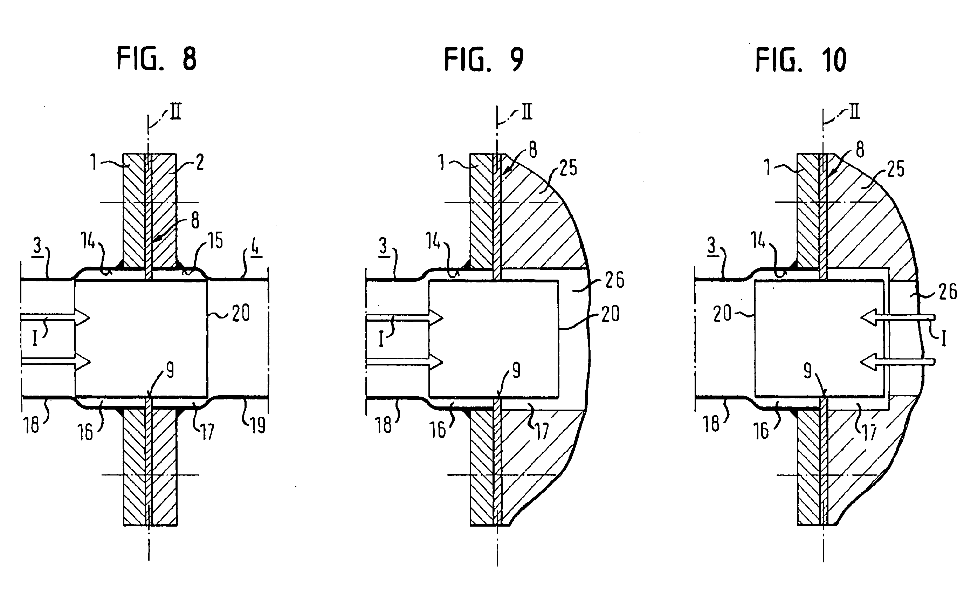

Die in Figur 8 dargestellte Variante stimmt weitgehend mit der Variante von Figur 3 überein. Im Unterschied zu der zuvor beschriebenen Variante weisen hier lediglich beide Rohre 3, 4 eine radiale Erweiterung im Flanschbereich auf. Außerdem ist der Durchmesser der separaten Hülse 20 so groß gewählt, dass sie allein durch Klemmen im Flanschbereich gehalten wird.

Figur 9 zeigt die Anwendung der Erfindung für eine Flanschverbindung zwischen einem Rohr 3 und einem Block 25, beispielsweise Motorblock. Der Block 25 weist einen Kanal 26 für das Medium auf, dessen Durchmesser im Flanschbereich unverändert ist. Diese Ausgestaltung ist insbesondere für Strömungen vom Rohr 3 zum Block 25 geeignet. Eine solche Variante wäre beispielsweise für die Abgasrückführung zu einem Motorblock geeignet.

Figur 10 zeigt eine Variante für Strömungen vom Motorblock 25 zum Rohr 3. Hier ist der Strömungskanal 26 des Blocks 25 im Bereich der Flanschverbindung radial erweitert, so dass die Hülse 20 fluchtend mit dem Kanal 26 angeordnet werden kann. Eine solche Anordnung wäre beispielsweise für die Abgasauslassöffnung eines Motorblocks geeignet.

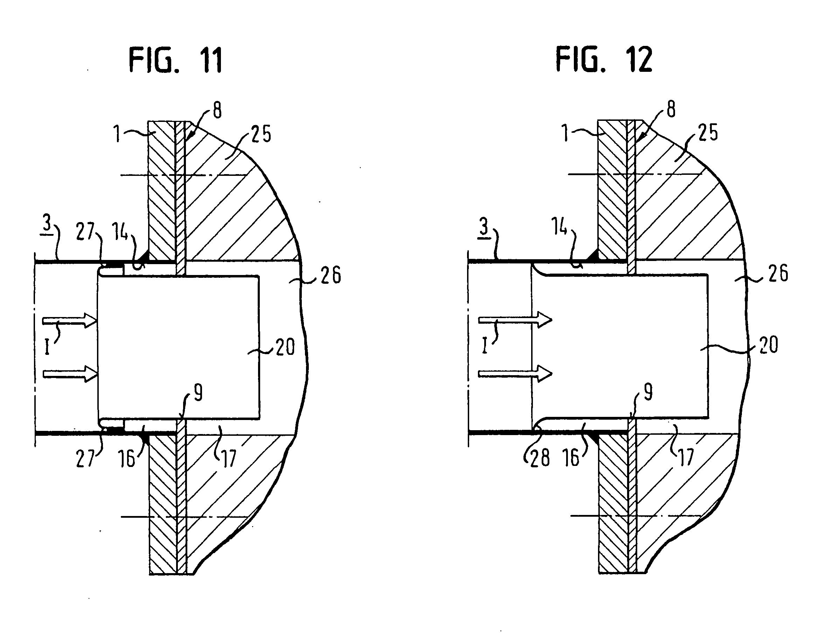

Die Figuren 11 und 12 zeigen zwei Varianten, die nicht in Rahmen, der Erfindung liegen und die derjenigen von Figur 9 ähnlich sind. Im Unterschied zu dieser Variante ist hier jedoch das Rohr 3 ohne Erweiterung ausgebildet. Stattdessen weist die Hülse 20 eine radiale Erweiterung auf, und zwar im Fall der Variante von Figur 11 in Form eines umgeschlagenen Randes 27 und im Fall der Variante von Figur 12 in Form eines trichterförmig erweiterten Endabschnitts 28. Die Erweiterung 27, 28 ist jeweils so ausgeführt, dass die Hülse 20 in diesem Bereich weitgehend dichtend innen am Rohr 3 anliegt. Auf diese Weise wird ein Eindringen des Mediums in den Ringraum 16 verhindert, der dadurch zusammen mit der Flachdichtung 8 in Strömungsrichtung I beidseits geschlossen ist. In diesem Bereich ergibt sich somit eine Luftspaltisolierung zwischen Hülse 20 und Rohr 3.

Die dargestellten Flanschverbindungen und Flanschdichtungen 8 weisen den Vorteil auf, dass die Flanschverbindung und die Flachdichtung 8 thermisch geschützt sind. Dies wird durch das Hülsenelement 11 beziehungsweise die separate Hülse 20 erreicht, durch welche eine Isolation zwischen dem heißen Medium und der Flanschverbindung mit Flachdichtung 8 durch das im Ringraum 16, 17 zwischen Hülse 20 beziehungsweise Hülsenelement 11 und den Rohren 3, 4 angestaute, abgekühlte Medium und/oder die dort vorhandene Luft bewirkt wird. Bei Herstellung des Hülsenelementes 11 durch Hochstellen der Flachdichtung 8 im Bereich Ihrer Durchgangsöffnung ist dies besonders kostengünstig und materialsparend. Die Verwendung einer separaten Hülse 20 hat den Vorteil, dass der gesamte Flanschbereich abgedeckt werden kann.

### Bezugszeichenliste

- 1: Flansch
- 2: Flansch
- 3: Rohr
- 4: Rohr
- 5: Durchtrittsöffnung
- 6: Durchtrittsöffnung
- 7: Verbindungsbolzen
- 8: Flachdichtung
- 9: Durchgangsöffnung
- 10a: Lage von 8
- 10b: Lage von 8
- 11: Hülsenelement
- 12: Abschnitt von 10a
- 13: Abschnitt von 10b
- 14: Innenwand von 3
- 15: Innenwand von 4
- 16: Ringraum
- 17: Ringraum
- 18: Abschnitt von 3
- 19: Abschnitt von 4
- 20: separate Hülse
- 21: Sicke
- 22: Sicke
- 23: Schweißstelle
- 24: Bund
- 25: Block
- 26: Kanal
- 27: Rand von 20
- 28: Erweiterung von 20

- I: Stromrichtung
- II: Kontaktebene

## Patentansprüche

1. Flachdichtung für Flanschverbindungen von Abgasführungen (3, 4) einer Brennkraftmaschine mit mindestens einer Durchgangsöffnung (9) für das Abgas, welche Flachdichtung am Umlang der mindestens einen Durchgangsöffnung (9) ein hülsenförmiges Element (11) aufweist, welches in einem radialen Abstand (a) zu der Flanschverbindung angeordnet ist,
**dadurch gekennzeichnet,**
**dass** das hülsenförmige Element (11) die Flanschverbindung auf der Innenseite beidseitig der Kontaktebene (II) der Flanschverbindung überdeckt, und dass das hülsenförmige Element (11) in einem im Innendurchmesser erweiterten Endbereich mindestens einer Abgasführung und in einem radialen Abstand (a) zu ihr angeordnet ist.

2. Flachdichtung nach Anspruch 1,
**dadurch gekennzeichnet,**
**dass** sie einteilig mit dem hülsenförmigen Element (11) ausgebildet ist oder dass das hülsenförmige Element (11) durch Schweißen, Löten, Kleben, Klemmen oder als Einsatzelement mit der Flachdichtung (8) verbunden ist.

3. Flachdichtung nach Anspruch 1 oder 2,
**dadurch gekennzeichnet,**
**dass** das hülsenförmige Element (11) mittels Abstandshaltern an der Flanschverbindung angeordnet ist.

4. Flachdichtung nach einem der Ansprüche 1 bis 3,
**dadurch gekennzeichnet,**
**dass** der Durchmesser des hülsenförmigen Elements (11) und der Innendurchmesser der Abgasführungen (3, 4) derart aufeinander abgestimmt sind, dass keine Verwirbelungen des durch die Verbindungsstelle strömenden Mediums entstehen und/oder dass der flache Bereich perforiert ist.

5. Flachdichtung nach einem der vorhergehenden Ansprüche,
**dadurch gekennzeichnet,**
**dass** sie eine zwei- oder mehrlagige Metalldichtung mit mindestens dem einen aus dem Lagenmaterial gezogenen hülsenförmigen Element (11) ist, wobei die mindestens zwei Lagen (10a, 10b) der Dichtung (8) bevorzugt eine oder mehrere umlaufende Sicken (21, 22) aufweisen.

6. Flachdichtung nach einem der Ansprüche 1 bis 5,
**dadurch gekennzeichnet,**
**dass** sie mindestens teilweise aus einem hitzebeständigen Material wie Keramik oder aus einem Graphitwerkstoff oder einem Glimmerwerkstoff mit einer Metallverstärkung gefertigt ist und/oder dass sie mindestens teilweise mit einer isolierenden Beschichtung versehen ist und/oder dass das hülsenförmige Element (11) von der Flanschverbindung klemmend gehalten ist und/oder dass das hülsenförmige Element (11) mit Strömungsleiteinrichtungen versehen ist.

7. Abgasführungen (3, 4) verbindende Flanschverbindung zur Verbindung von Abgasführungen (3, 4) einer Brennkraftmaschine mit einer zwischen den Flanschen (1,2) angeordneten Flachdichtung (8), insbesondere nach einem der vorhergehenden Ansprüche, zur Abdichtung des Verbindungsbereiches der Abgasführungen (3, 4) nach außen, bei welcher im Verbindungsbereich der Abgasführungen (3, 4) eine Abschirmung in Art einer Hülse (11, 20) vorgesehen ist, die einen radialen Abstand (a) zur Innenwand (14, 15) der Abgasführungen (3, 4) aufweist,
**dadurch gekennzeichnet,**
**dass** die Abschirmung (11, 20) auf beiden Seiten der Kontaktebene (II) der Flanschverbindung vorgesehen ist und dass die Abgasführungen (3, 4) im Bereich der Abschirmung (11, 20) radial erweitert sind und die Abschirmung (11, 20) annähernd fluchtend mit dem nicht erweiterten Bereich (18, 19) der Abgasführungen (3, 4) ausgebildet ist.

8. Flanschverbindung nach Anspruch 7,
**dadurch gekennzeichnet,**
**dass** Mittel vorgesehen sind, durch welche der Durchfluss des Mediums durch den so zwischen Abschirmung (11, 20) und Abgasführungen (3, 4) gebildeten Ringraum (16,17) verhindert ist, insbesondere eine zwischen Abschirmung (11, 20) und Abgasführungen (3, 4) angeordnete Trennwand, und/oder dass die Flachdichtung (8) ein-, zwei- oder mehrlagig ausgebildet ist.

9. Flanschverbindung nach Anspruch 7 oder 8,
**dadurch gekennzeichnet,**
**dass** die Abschirmung (11) einstückig mit der Flachdichtung (8) ausgebildet ist oder dass die Abschirmung (20) als separate Hülse ausgebildet ist, wobei die separate Hülse (20) bevorzugt an der Flachdichtung (8) befestigt ist.

10. Verfahren zur Herstellung einer Flanschverbindung nach einem der Ansprüche 7 bis 9,
**dadurch gekennzeichnet,**
**dass** die Abschirmung (11) durch Hochstellen der Flachdichtung (8) im Bereich der Durchgangsöffnung (9) für das Fluid gebildet wird oder dass die Abschirmung durch eine separate Hülse (20) gebildet wird, die insbesondere durch Schweißen mit der Flachdichtung (8) und/oder mindestens einer Fluidführung (3, 4) verbunden wird.

## Claims

1. A flat gasket for flange connections of exhaust gas guides (3, 4) of an internal combustion engine comprising at least one passage opening (9) for the exhaust gas, said flat gasket having a sleeve-shaped element (11) at the periphery of the at least one passage opening (9), said sleeve-shaped element being arranged at a radial spacing (a) from the flange connection,
**characterised in that**
the sleeve shaped element (11) covers the flange connection at the inner side at both sides of the contact plane (II) of the flange connection; and **in that** the sleeve-shaped element (11) is arranged in an end region expanded in the inner diameter of at least one exhaust gas guide and at a radial spacing (a) therefrom.

2. A flat gasket in accordance with claim 1, **characterised in that** it is made in one part with the sleeve-shaped element (11); or **in that** the sleeve-shaped element (11) is connected to the flat gasket (8) by welding, soldering, adhesive bonding, clamping or as an inserted element.

3. A flat gasket in accordance with claim 1 or claim 2, **characterised in that** the sleeve-shaped element (11) is arranged at the flange connection by means of spacers.

4. A flat gasket in accordance with any one of the claims 1 to 3, **characterised in that** the diameter of the sleeve-shaped element (11) and the inner diameter of the exhaust gas guides (3, 4) are matched to one another such that no eddies of the medium flowing through the connection site arise; and/or **in that** the flat region is perforated.

5. A flat gasket in accordance with any one of the preceding claims, **characterised in that** it is a two-layer or multilayer metal gasket having at least the one sleeve-shaped element (11) drawn out of the layer material, wherein the at least two layers (10a, 10b) of the gasket (8) preferably have one or more peripheral beads (21, 22).

6. A flat gasket in accordance with any one of the claims 1 to 5, **characterised in that** it is produced at least in part from a heat-resistant material such as a ceramic material or a graphite material or a mica material with a metal reinforcement; and/or **in that** it is provided at least in part with an insulating coating; and/or **in that** the sleeve-shaped element (11) is held in a clamping manner by the flange connection; and/or **in that** the sleeve-shaped element (11) is provided with flow guiding devices.

7. A flange connection connecting exhaust gas guides (3, 4) for the connection of exhaust guides (3, 4) of an internal combustion engine comprising a flat gasket (8,) in particular in accordance with any one of the preceding claims, arranged between the flanges (1, 2) for the outward sealing of the connection region of the exhaust gas guides (3, 4), wherein a screen in the form of a sleeve (11, 20) is provided in the connection region of the exhaust gas guides (3, 4) and has a radial spacing (a) from the inner wall (14, 15) of the exhaust gas guides (3, 4),
**characterised in that**
the screen (11, 20) is provided at both sides of the contact plane (III) of the flange connection; and **in that** the exhaust gas guides (3, 4) are radially expanded in the region of the screen (11, 20); and **in that** the screen (11, 20) is made to approximately coincide with the non-expanded region (18, 19) of the exhaust gas guides (3, 4).

8. A flange connection in accordance with claim 7, **characterised in that** means, in particular a separation wall arranged between the screen (11, 20) and the exhaust gas guides (3, 4), are provided by which the flow of the medium through the ring space (16, 17) thus formed between the screen (11, 20) and the exhaust gas guides (3, 4) is prevented; and/or **in that** the flat gasket (8) is made with one layer, two layers or multiple layers.

9. A flange connection in accordance with claim 7 or claim 8, **characterised in that** the screen (11) is made integrally with the flat gasket (8); or **in that** the screen (20) is made as a separate sleeve, with the separate sleeve (20) preferably being fastened to the flat gasket (8).

10. A method of manufacturing a flange connection in accordance with any one of the claims 7 to 9, **characterised in that** the screen (11) is formed by a high positioning of the flat gasket (8) in the region of the passage opening (9) for the fluid; or **in that** the screen is formed by a separate sleeve (20) which is in particular connected by welding to the flat gasket (8) and/or to at least one fluid guide (3, 4).

## Revendications

1. Joint plat pour raccords à brides de conduites de gaz d'échappement (3, 4) d'un moteur a combustion, comportant au moins une ouverture de passage (9) pour le gaz d'échappement, lequel joint plat présente sur la périphérie de ladite au moins une ouverture de passage (9) un élément (11) en forme de douille qui est agencé à distance radiale (a) du raccord à brides, **caractérisé en ce que** l'élément en forme de douille (11) recouvre le raccord à brides sur la face intérieure des deux côtés du plan de contact (II) du raccord à brides, et **en ce que** l'élément en forme de douille (11) est agencé dans une région terminale de diamètre intérieur évasé d'au moins une conduite de gaz d'échappement et à une distance radiale (a) de celle-ci.

2. Joint plat selon la revendication 1, **caractérisé en ce qu'**il est réalisé d'un seul tenant avec l'élément en forme de douille (11) ou **en ce que** l'élément en forme de douille (11) est relié au joint plat (8) par soudure, par brasage, par collage, par serrage ou sous forme d'insert.

3. Joint plat selon la revendication 1 ou 2, **caractérisé en ce que** l'élément en forme de douille (11) est agencé sur le raccord à brides au moyen d'écarteurs.

4. Joint plat selon l'une des revendications 1 à 3, **caractérisé en ce que** le diamètre de l'élément en forme de douille (11) et le diamètre intérieur des conduites de gaz d'échappement (3, 4) sont adaptés l'un à l'autre de telle sorte qu'il ne se produit pas de tourbillons du fluide s'écoulant à travers l'emplacement de liaison et/ou **en ce que** la région plate est perforée.

5. Joint plat selon l'une des revendications précédentes, **caractérisé en ce qu'**il est un joint métallique monocouche ou multicouche avec au moins un élément en forme de douille tréfilé à partir du matériau en couches, les au moins deux couches (10a, 10b) du joint (8) présentant de préférence une ou plusieurs moulures (21, 22) périphériques.

6. Joint plat selon l'une des revendications 1 à 5, **caractérisé en ce qu'**il est réalisé au moins partiellement à partir d'un matériau réfractaire tel que la céramique ou en un matériau en graphite ou en un matériau en mica avec un renforcement métallique et/ou **en ce qu'**il est pourvu au moins partiellement d'un revêtement isolant et/ou **en ce que** l'élément en forme de douille (11) est retenu par serrage par le raccord à brides et/ou **en ce que** l'élément en forme de douille (11) est pourvu de systèmes de conduite d'écoulement.

7. Raccord à brides reliant des conduites de gaz d'échappement (3, 4) pour relier des conduites de gaz d'échappement (3, 4) d'un moteur à combustion avec un joint plat (8) agencé entre les brides (1, 2), en particulier selon l'une des revendications précédentes, pour étancher la zone de raccord des conduites de gaz d'échappement (3, 4) vers l'extérieur, dans lequel il est prévu dans la zone de raccord des conduites de gaz d'échappement (3, 4) un blindage à la manière d'une douille (11, 20) qui présente une distance radiale (a) par rapport à la paroi intérieure (14, 15) des conduites de gaz d'échappement (3, 4), **caractérisé en ce que** le blindage (11, 20) est prévu sur les deux côtés du plan de contact (II) du raccord à brides et **en ce que** les conduites de gaz d'échappement (3, 4) sont évasées radialement dans la zone du blindage (11, 20) et le blindage (11, 20) est réalisé approximativement en affleurement avec la zone non évasée (18, 19) des conduites de gaz d'échappement (3, 4).

8. Raccord de brides selon la revendication 7, **caractérisé en ce qu'**il est prévu des moyens par lesquels est empêché l'écoulement du fluide à travers la chambre annulaire (16, 17) ainsi formée entre le blindage (11, 20) et les conduites de gaz d'échappement (3, 4), en particulier une cloison de séparation agencée entre le blindage (11, 20) et les conduites de gaz d'échappement (3, 4), et/ou **en ce que** le joint plat (8) est réalisé monocouche, bicouche ou multicouche.

9. Raccord de brides selon la revendication 7 ou 8, **caractérisé en ce que** le blindage (11) est réalisé d'un seul tenant avec le joint plat (8) ou **en ce que** le blindage (20) est réalisé sous forme de douille séparée, la douille (20) séparée étant de préférence fixée au joint plat (8).

10. Procédé de réalisation d'un raccord à brides selon l'une des revendications 7 à 9, **caractérisé en ce que** le blindage (11) est formé en mettant debout dressant le joint plat (8) dans la zone de l'ouverture de passage (9) pour le fluide ou **en ce que** le blindage est formé par une douille (20) séparée qui est reliée en particulier par soudage au joint plat (8) et/ou au moins à une conduite de fluide (3, 4).
